# EUROPEAN PATENT SPECIFICATION

(11) **EP 1 911 943 B1**
(45) Date of publication and mention of the grant of the patent: **22.12.2010**
(21) Application number: 06021563.9
(22) Date of filing: 13.10.2006
(51) Int. Cl.: F01N 3/05, F01N 1/08

(54) **Exhaust gas cooling device**
Abgaskühlungsvorrichtung
Dispositif de refroidissement des gaz d'échappement

(43) Date of publication of application: 16.04.2008
(73) Proprietor: GM Global Technology Operations, Inc., Detroit, MI 48265-3000 (US)
(72) Inventor: Amberntsson, Annika, Dr., 43167 Molndal (SE); Freiholtz, Matthias, 46237 Vänersborg (SE)
(74) Representative: Strauss, Peter

(56) References cited:
- EP-A- 1 327 754
- DE-A1- 10 038 795
- US-A1- 2002 144 803

## Description

The present invention relates to an exhaust gas cooling device comprising an inlet pipe and an outlet pipe, a main conduit connecting the inlet pipe with the outlet pipe and at least one additional conduit connecting the inlet pipe with the outlet pipe.

Today, the broad launch of stratified charged direct injected engines depends on finding a well-functioning, robust and durable emission control system. The conventional three-way catalyst does not remove NOₓ to a satisfactory degree under lean conditions. The most promising technique so far regarding removal of NOₓ from the exhaust gases is the NOₓ storage and reduction concept (also known as NOₓ trapping or NOₓ adsorption).

The main drawback so far has been the relatively limited working temperature span.

One reason is the temperature sensitivity of catalytic converters suitable for the purposes. The catalyst materials are very sensitive towards thermal aging, and thus the upper working temperature should be kept safely below the breakdown temperature, which typically is about 800 °C. Hence, the working temperature should preferably not exceed about 500°C

Further, the efficiency of the catalytic converters is much reduced at lower temperatures. Thus, to keep the emissions at low levels, the working temperature should be kept above the lower temperature limit, which typically is about 200 °C. However, the working temperature should preferably not fall below about 300 °C.

EP 1 327 754 A1 describes a device for cooling exhaust gas which comprises inlet and outlet pipes connected via a main conduit and at least one additional conduit arranged inside the main conduit.

US 2002/0144803 A1 describes a cooler for exhaust gas mentioned in the preamble of claim 1. The cooler comprises inlet and outlet pipes which are connected via a housing. The housing comprises two chambers.

DE 100 38 795 A1 describes another cooler for exhaust gas.

One cooling section of an exhaust gas system, to cool down the exhaust gas temperature, is described in US 2004/0093857 A1.
The cooling section comprises one or more gas lines with additional cooling means, such as outward projecting ribs arranged on the circumference of the cooling sections, or inward projecting indentations in one or more of the gas lines.

The aim of the cooling section in US 2004/0093857 A1 is to obtain maximum temperature reduction at intermediate values of the exhaust gas mass flow rates.

However, typically the exhaust gas temperature is highest when the mass flow is highest (i.e. at high load on the engine).

Hence, for best protection of the catalyst material, it should be desirable that the maximum cooling of the exhaust gas, in terms degrees Celsius, should occur when the inlet exhaust gas has the highest temperature, typically at the highest mass flow rates.

Further, in order for the exhaust gas temperature at all times to be held above the lower temperature limit, the minimum cooling of the exhaust gas should occur when the inlet exhaust gas has the lowest temperature, typically at the lowest mass flow rates.

Hence, there is a need in the art to provide an exhaust gas cooling device that provides low cooling (in terms of degrees) at low gas mass flow rates, and high cooling at high gas mass flow rates.

It is an object of the present invention to at least partly overcome the drawbacks of the prior art and to provide an exhaust gas cooling device which provides low cooling (in terms of degrees) at low gas mass flow rates, and high cooling at high gas mass flow rates.

Such a cooling device is described in the appended claims.

Thus, in a first aspect the present invention provides an exhaust gas cooling device comprising an inlet pipe and an outlet pipe, a main conduit connecting said inlet pipe with said outlet pipe, and at least one additional conduit connecting said inlet pipe with said outlet pipe. Further, the main conduit and the at least one additional conduit are arranged parallel and adjacent to each other and connected by a first and a second manifold section to the inlet pipe and the outlet pipe, respectively, the cross sectional area of said main conduit is smaller than the cross sectional area of said inlet pipe, and a turbulence generating element is arranged in each one of said at least one additional conduit.

At low gas flow rates through the device, the main portion of gas will flow through the main gas conduit, even though the cross sectional area of the main gas conduit is smaller than that of the inlet pipe. In the main gas conduit the flow is essentially unprocessed, and hence only a minor cooling of the gas is achieved in the main conduit.

However, as the gas flow rates increases, the flow resistance in the main conduit causes a higher portion of the exhaust gas to flow through the additional conduit (s), due to the reduced cross sectional area.

In the additional gas conduits, the exhaust gas will encounter the turbulence generating elements, whereby the exhaust gas flow will become an essentially turbulent gas flow. The turbulence in the gas flow increases the heat transfer from the gas to the outside, hence resulting in a significant cooling of the gas flow in the additional gas conduit(s).

The heat transfer surface in the additional conduit(s) is further increased due to the presence of the turbulence generating means.

Thus, by use of the cooling device of the present invention, as a component of the exhaust gas system of an internal combustion engine the following may be achieved:
- Minor cooling of the exhaust gas temperature at low gas flow rates through the cooling device, hence keeping the exhaust temperature within the operating temperature of a catalytic converter at low gas flow rates. Further, the minor cooling of the exhaust gas temperature at low gas flow rates is advantageous for the cold start properties of the engine. A cold start of the engine is performed at low gas flow rates, and it is advantageous, in terms of pollution, that the catalytic converter quickly reaches its working temperature. Thus, it is advantageous that there is only minor cooling of the exhaust during the cold start process.
- Major cooling of the exhaust gas temperature at high gas flow rates through the cooling device, hence reducing the exhaust gas temperature to the operating temperature of the catalytic converter, even at high gas flow rates.

Further, the cooling device is fully passive, i.e. no moving parts or control systems are used to achieve the difference in cooling capacity, leading to a robust and durable cooling device, which is relatively cheap and easy to produce.

In an exhaust gas cooling device of the present invention, the gas path from said inlet pipe to said outlet pipe is typically shorter through said main conduit than through said at least one additional conduit.

When the main conduit is shorter, the gas flow will preferentially flow through the main conduit than through the additionally conduit(s), especially at low gas flow rates.

In embodiments of the present invention, the at least one additional gas conduit may be arranged parallel and adjacent to said main conduit.

Due to the higher heat transfer in the additional conduit(s), they will become warmer than the main conduit during operation. By arranging the additional conduit(s) parallel and adjacent to the main conduit, the main conduit will be somewhat heated and insulated. This will further reduce the cooling of the exhaust gas in the main conduit. Further, the main conduit will take heat from the additional gas conduit (s), thus increasing the cooling of the exhaust gasses in the additional conduits.

In embodiments of the present invention, the cooling device may comprise a first additional conduit and a second additional conduit being arranged on mutually opposite sides of said main conduit.

By placing the two additional gas conduits on mutually opposite sides, the device has a compact and low profile design.
Further, the main conduit will be heated and insulated on the sides by means of the additional conduits, while exposing a large portion of the outer surface of the additional conduits to the surroundings, for good cooling properties.

In the present invention, said turbulence generating element comprises a perforated sheet. The perforated sheet divides the additional conduit (s) into an upstream portion, i.e. towards the inlet pipe, and a downstream portion, i.e. towards the outlet pipe.

A perforated sheet as the turbulence generating element has excellent properties in creating a turbulent flow and is easy to produce and to attach in the conduits. Further, the perforated sheet provides a substantial increase in the heat transfer surface

In embodiments of the present invention, the upstream portion is shorter than said downstream portion. Hence, the turbulence is generated early in the additional conduit(s), further increasing the heat transfer from the gas to the walls of the conduits.

Further in the present invention, the perforated sheet(s) is tilted with respect to the main direction of gas flow in the device.

As the perforated sheet is tilted with respect to the gas flow direction, the effective area of the perforated sheet is substantially larger than the cross-sectional area of the additional conduit. Several beneficial effects are achieved by this.

The tilted sheet provides a large perforated surface for obtaining the turbulent flow.

The generation of turbulence is distributed over the whole length, counted in the gas flow direction, of the sheet. As a result, the region in the conduit where the flow is turbulent will be extended, yielding an increased heat transfer.

The extended effective area of the perforated sheet provides an increased area for heat transfer from the exhaust gas to the perforated sheet.

The tilted sheet will push the gas flow towards the wall of the conduit, yielding an increased heat transfer from the gas to the conduit.

In embodiments of the present invention, the perforated sheet may have a double curvature surface, and the upstream portion of said perforated sheet and the downstream portion of said perforated sheet is fitted against mutually opposite halves of the inner wall of said additional conduit.

In embodiments of the present invention, the perforated sheets are attached in said additional conduit by means of a continuous weld along the longitudinal direction said additional conduit.

By welding the sheets to the wall material of the additional conduits, a high heat transfer is possible from the sheet to the conduit walls.

In embodiments of the present invention, the exhaust gas cooling device comprises an upper profiled plate and a lower profiled plate which are joined together to form said main conduit and said at least one additional conduit.

This is an easy approach to produce the cooling device of the invention, since only two profiled plates are necessary to form the necessary conduits.

In embodiments of the present invention, the perforated sheets are provided with at least one tongue that is sandwiched between said upper and lower profile plates, to attach said perforated sheet in said additional conduit.

The sandwich contact between the tongue and the upper and lower sheet provides good opportunities for heat transfer between the perforated sheet and the conduit walls, as well as a secure attachment of the perforated sheet in the conduit.

In embodiments of the present invention, throttling portion may be arranged in said main conduit. The throttling portion is used to fine adjust the flow distribution between the conduits of the device.

In a second aspect, the present invention relates to an exhaust gas system for an internal combustion engine, wherein an exhaust gas cooling device of the present invention is arranged upstream, in the gas flow direction, of a catalytic converter.

These and more aspects and advantages of the present invention will now be described in the following detailed description of preferred embodiments, with reference to the appended drawings.
Figure 1 illustrates a cooling device of the present invention
Figure 2 illustrates, in exploded view, the cooling device of figure 1.
Figure 3 illustrates, in cross-sectional view along the longitudinal direction of the conduits, the cooling device of figure 1.
Figure 4 illustrates, in perspective view, a perforated sheet from the cooling device of figure 1.
Figure 5 illustrates, in cross-sectional view transversely to the longitudinal direction of the conduits, the cooling device of figure 1.
Figure 6 illustrates an alternative embodiment of a cooling device of the present invention.

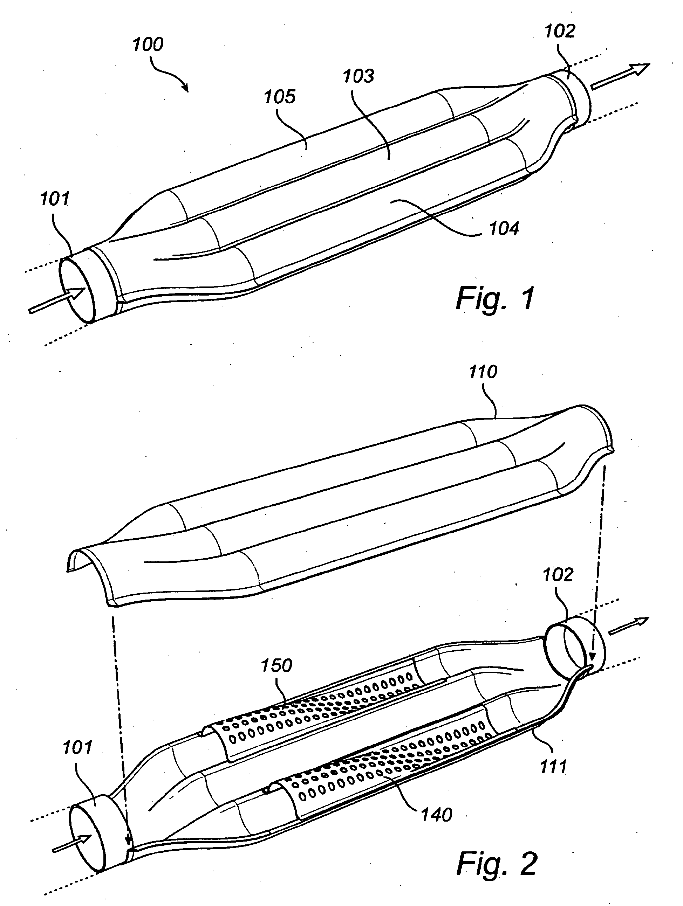

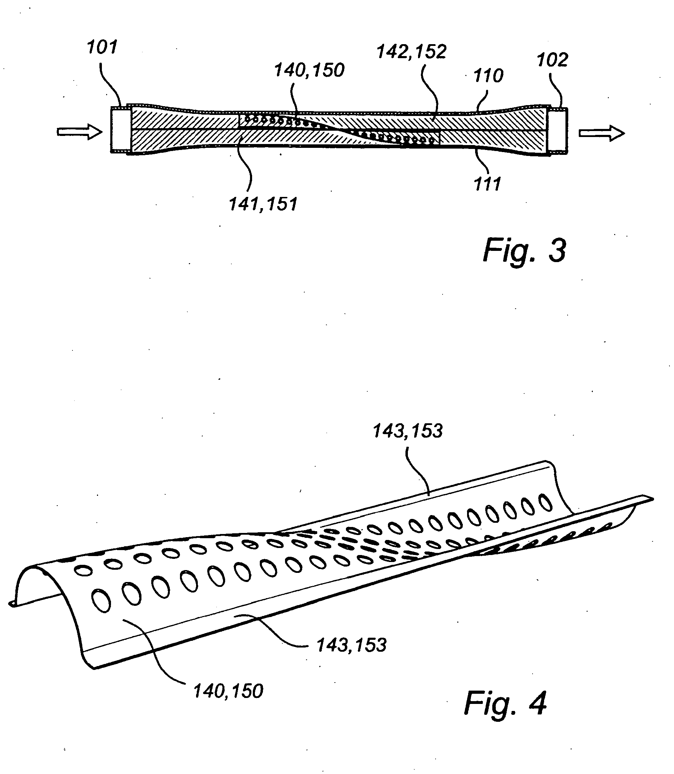

An exemplary embodiment of cooling device 100 according to the present invention, and details thereof, are illustrated in figures 1 to 5.

### Cooling device 100

The cooling device 100 comprises an exhaust gas inlet pipe 101 and an exhaust gas outlet pipe 102, connected by a main exhaust gas conduit 103 and two additional exhaust gas conduits 104, 105.

A first manifold section connects the inlet pipe with the main and additional gas conduits, and a second manifold section connects the main and additional conduits with the outlet pipe.

The shell of the cooling device 100 is formed by an upper plate 110 joined to a lower plate 111. The upper plate 110 and the lower plate 111 are further profiled such that that when joined together, the three gas conduits 103, 104, 105, with essentially circular cross-section, are formed as gaps between the two plates 110, 111. Each of the upper plate 110 and the lower plate 111 has three adjacent and parallel extended semi-circular portions, which when the plates 110, 111 are joined together forms the three essentially circular conduits 103, 104, 105.

The profile plates are made of a material having a high heat conduction capacity, typically a metallic material, such as steel or aluminium.

### Main Conduit

The main conduit 103 forms an essentially straight conduit from the inlet pipe 101 to the outlet pipe 102.

The two additional gas conduits 104, 105 are placed parallel and adjacent to the main conduit 103, on mutually opposite sides of the main conduit 103.

The cross sectional area of the main conduit 103, transversely to the longitudinal direction of the conduit, is smaller than then the cross sectional area of the inlet pipe 101. Hence, the main conduit 103 has a smaller gas flow capacity than the inlet pipe 101.

At low gas flow rates into the cooling device 100, the capacity of the main conduit 103 is sufficient to transport the gas towards the outlet pipe 102.

The flow path between the inlet pipe and the outlet pipe is shorter through the main conduit 103 than through the additional conduits 104, 105. Hence, at low gas flow rates, the exhaust gas will preferentially flow through the main conduit.

Typically, the cross sectional area of the main conduit 103 is from about 2,5 to about 50 % of the cross sectional area of the inlet pipe 101 (for a circular cross-section, the diameter of the main conduit is from about 15 to about 70 % of the diameter of the inlet pipe).

The inlet and outlet pipe diameters depend on the application (such as the type of engine and vehicle) but are typically independently in the range of from about 10 to about 200 mm, such as from about 40 to about 100 mm, for example about 60 mm.

The length of the device in the direction along the longitudinal direction of the conduits depend on the application, but is typically from about 100 mm to about 1000 mm.

In the main conduit 103, the gas passes essentially unobstructed and unaffected, typically as an essentially laminar flow.

Hence, the heat transfer from the gas to the walls of the main conduit is kept relatively low.

### Additional conduits

However, as the gas flow rates increase, the capacity of the main conduit becomes to low, and increasing proportions of the gas flow pass through the additional conduits 104, 105 in order to reach the outlet pipe 102.

Typically, the cross sectional area of each of the additional conduits 104, 105 is independently from about 2,5 to about 50 % of the cross sectional area of the inlet pipe 101 (for a circular cross-section, the diameter of an additional conduit is from about 15 to about 70 % of the diameter of the inlet pipe).

### Perforated sheet

In each of the two additional conduits 104, 105 is arranged a turbulence generating element in form of a perforated sheet 140, 150.

The perforated sheet 140, 150 divides the additional conduits into an upstream portion 141, 151, located on the inlet side of the sheet 140, 150, and a downstream portion 142, 152, located on the outlet side of the sheet 140, 150.

The perforated sheets are made of a material having a high heat conduction capacity, typically a metallic material, such as steel or aluminium.

The gas passing from the upstream portion 141, 151 to the downstream portion 142, 152 of an additional conduit 104, 105, must pass through the perforation holes in the perforated sheet. This causes the gas flow on the downstream side to be turbulent.

Due to the turbulence in the flow, the heat transfer from the gas to the inner wall of the additional conduit is increased.

Further, the surface of the perforated sheets 140, 150, which meet the gas flow, increases the effective area for heat transfer.

The perforated sheets 140, 150 are tilted with respect to the gas flow direction, i.e. portions of the sheets are not parallel, nor perpendicular to the gas flow direction. Hence, the sheet is extended in the longitudinal direction of the conduits. Thus, the area of the perforated sheet is substantially larger than the cross-sectional area, transversely to the longitudinal direction of the conduit. This has at least some of the following advantageous effects:
- the tilted sheet provides a large perforated surface for obtaining the turbulent flow;
- the generation of turbulence is distributed over the whole length of the sheet, counted in the gas flow direction. As a result, the region in the conduit where the flow is turbulent will be extended, yielding an increased heat transfer.
- the extended effective area of the perforated sheet provides an increased area for heat transfer from the exhaust gas to the perforated sheet.
- the tilted sheet will push the gas flow towards the wall of the conduit, yielding an increased heat transfer from the gas to the conduit.

The perforation hole density (perforation holes/area unit) and the perforation hole sizes are selected such that the durability of the perforated sheet is adequate, a sufficient turbulence is generated in the gas flow, and such that the sheet presents a suitable flow resistance. The perforation hole density and sizes will have to be tailored for each engine type, as will be apparent to those skilled in the art.

In the preferred embodiment of the present invention, the tilted perforated sheets 140, 150 have a double curvature surface, where the upstream portion of the sheet is fitted against a first cross-sectional half of the conduit, and the downstream portion of the sheet is fitted against the opposing cross-sectional half of the conduit.

In a typical arrangement on a vehicle, the cooling device 100 will be arranged under the vehicle with the lower plate 111 facing the ground and the upper plate 110 facing the underside of the vehicle.

When in motion, the head wind will preferentially pass under the lower plate 111 of the cooling device. Thus, the lower side of the cooling device will provide a more efficient heat transfer. Thus, it is in such arrangements advantageous that the gas flow in the cooling device is pressed towards the lower plate. Hence, the upstream portion of the perforated sheet 140, 150 should be fitted against the upper plate 110 and the downstream portion should be fitted against the lower plate 111.

In other arrangements on a vehicle, the cooling device 100 is not arranged with the lower plate 111 facing the ground. For example, the device may be arranged vertically.

However, as mentioned above, it is in any case advantageous that in each additional gas conduit, the perforated plates should be arranged such that the gas flow is pressed towards that side of the additional gas conduits which is exposed to the main portion of the head wind, in order to increase the heat transfer. Hence, the upstream portion of the perforated sheet should be fitted against the side of the additional gas conduit, which is opposite to that being exposed to the main portion of the head wind.

The double curvature perforated sheet 140, 150 in the present embodiment each has two mutually opposite tongues 143, 153 that extends radially from the perforated sheet. The tongues 143, 153 are extended along the length of the perforated sheets in the longitudinal extension of the conduits, and are sandwiched between the upper plate 110 and the lower plate 111 to form a large contact surface from the perforated sheet 140, 150 to the conduit wall material (which is formed by the upper plate 110 and the lower plate 111).

Typically, the tongues 143, 153 are welded to the upper and/or the lower plate in order to obtain good heat transfer. Preferably, to maximize the heat transfer, each of the tongues is welded to one or both of the plates by means of a continuous weld along essentially the whole extension of the tongues in the longitudinal direction of the conduits.

In figure 2, the cooling device 100 is illustrated such that the upstream portion 141, 151 and the downstream portion 142, 152 of the additional conduits 104, 105 are of essentially equal length along the longitudinal direction of the conduits.

However, in alternative embodiments of the invention, it may be advantageous that the perforated sheet is arranged closer to the inlet pipe or closer to the outlet pipe, such that the upstream portion is shorter or longer than the downstream portion. Preferably, the upstream portion is shorter than the downstream portion, so that turbulent flow is present in a larger portion of the additional conduits.

Further, the positioning of the perforated sheet 140 in the first additional conduit 104 may be different from the positioning of the perforated sheet 150 in the second additional conduit 105.

### Throttling portion

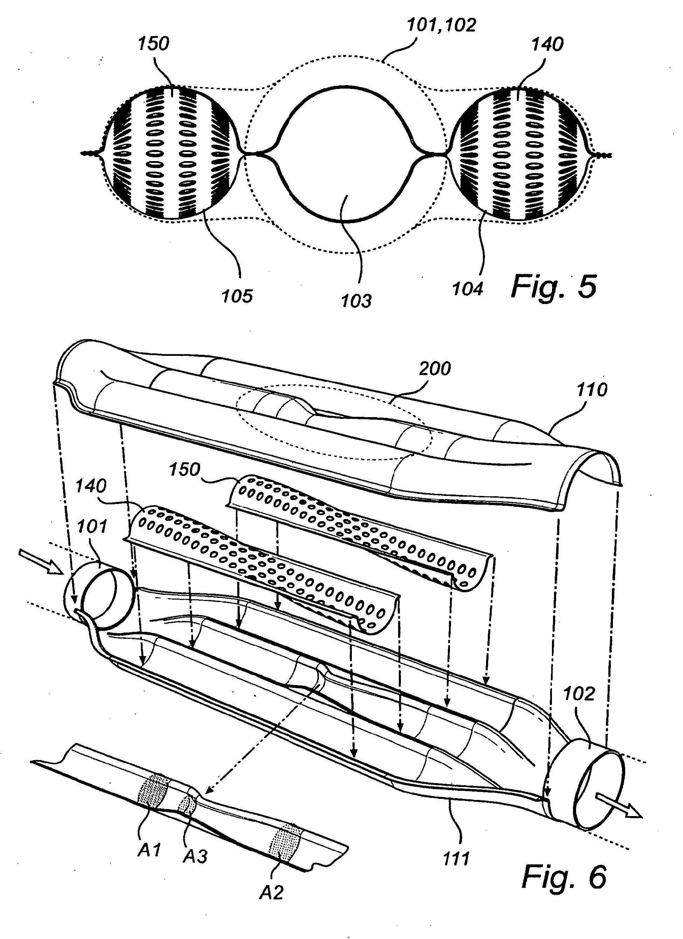

In a second exemplary embodiment of the present invention, as illustrated in figure 6, a throttling portion 200 is introduced in the main conduit. The throttling portion 200 has a first maximum cross-sectional area A₁ transversely to the longitudinal extension of the main conduit, a second maximum cross-sectional area A₂ transversely to the longitudinal extension of the conduit, and a third cross-sectional area A₃ transversely to the longitudinal direction of the main conduit, which is smaller than said first maximum cross-sectional area A₁ and said second maximum cross-sectional area A₂. The third cross-sectional surface A₃ is located downstream in respect to the first maximum cross-sectional area A₁ and upstream in respect to the second maximum cross-sectional surface A₂.

The throttling portion 200 is arranged to tune the flow distribution between the main and additional conduit(s). At low gas flow rates, the portion of gas through the main conduit is increased, and at high gas flow rates, the portion of gas through the additional conduit(s) is increased.

Those skilled in the art will realize that the present invention by no means is limited to the preferred embodiments described above. On the contrary, many modifications and variations are possible within the scope of the appended claims. For example, the present invention is not limited to comprise one or two additional conduits, but may comprise also three or more such additional conduits provided with a turbulence-generating element. For instance, six such additional conduits, with turbulence generating elements may together surround the main conduit. This might be advantageous since the main conduit in such a case will be well insulated from cooling by the additional conduits, and the exhaust gas will be cooled down only to a minor extent when passing through the main conduit.

Further, a device with two additional conduits is not limited to the design where the two additional conduits are arranged on mutually opposite sides of the main conduits. The additional conduits and the main conduits may for example be in a triangular arrangement, where the two additional conduits arranged adjacent to each other.

Each of the additional conduits may optionally comprise more than one perforated, turbulence-generating sheet.

The cooling device may in alternative embodiments be formed of two or more separate tubes with a first manifold tube connecting the inlet pipe to the main and additional conduit (s), and a second manifold connecting the main and additional conduit (s) to the outlet pipe.

## Claims

1. An exhaust gas cooling device (100) comprising an inlet pipe (101) and an outlet pipe (102), a main conduit (103) connecting said inlet pipe (101) with said outlet pipe (102) , and at least one additional conduit (104, 105) connecting said inlet pipe (101) with said outlet pipe (102), wherein the cross sectional area of said main conduit (103) is smaller than the cross sectional area of said inlet pipe (101), and a turbulence-generating element is arranged in said at least one additional conduit (104, 105), wherein said turbulence-generating element (140, 150) comprises a perforated sheet (140, 150), which divides said at least one additional conduit (104, 105) into an upstream portion (141, 151), towards the inlet pipe (101), and a downstream portion (142, 152), towards the outlet pipe (102), **characterised in that** said perforated sheet (140, 150) with its holes is tilted with respect to the gas flow direction in the inlet pipe (101).

2. An exhaust gas cooling device (100) according to claim 1, wherein the gas path from said inlet pipe (101) to said outlet pipe (102) is shorter through said main conduit (103) than through said at least one additional conduit (104, 105).

3. An exhaust gas cooling device (100) according to claim 1 or 2, wherein said at least one additional gas conduit (104, 105) is arranged parallel and adjacent to and said main conduit (103).

4. An exhaust gas cooling (100) device according to any of the preceding claims, wherein a first additional conduit (104) and a second additional conduit (105) are arranged on mutually opposite sides of said main conduit (103).

5. An exhaust gas cooling (100) device according to any of the preceding claims, wherein said upstream portion (141, 151) is shorter than said downstream portion (142, 152).

6. An exhaust gas cooling (100) device according to any of the preceding claims, wherein said perforated sheet (140, 150) has a double curvature surface, and an upstream portion of said perforated sheet and a downstream portion of said perforated sheet is fitted against mutually opposite halves of the inner wall of said conduit (104, 105).

7. An exhaust gas cooling (100) device according to any of the preceding claims, wherein said perforated sheet (140, 150) is attached in said additional conduit (104, 105) by means of a continuous weld along the longitudinal direction of said additional conduit.

8. An exhaust gas cooling device (100) according to any of the preceding claims, comprising an upper profiled plate (110) and a lower profiled plate (111), which are joined together to form said main conduit (103) and said at least one additional conduit (104, 105).

9. An exhaust gas cooling device (100) according to claim 7 or 8, wherein the upstream portion of said perforated sheet (140, 150) is fitted against said upper profiled plate (110).

10. An exhaust gas cooling device (100) according to claim 8 or 9, wherein said perforated sheet (140, 150) is provided with at least one tongue (143, 153) which is sandwiched between said upper profiled plate (110) and said lower profile plate (111) , to attach said perforated sheet in said additional conduit.

11. An exhaust gas cooling device (100) according to any of the preceding claims, wherein a throttling portion (200) is arranged in said main conduit (103) , said throttling portion having a first (A1) and a second (A2) maximum cross-sectional area transversely to the longitudinal direction of said main conduit (103), and a third cross-sectional area (A3) transversely to the longitudinal direction of said main conduit, which third cross-sectional area is smaller than said first maximum cross-sectional area and said second maximum cross-sectional area.

12. An internal combustion engine exhaust system, comprising an internal combustion engine, a catalytic converter and an exhaust gas cooling device (100) according to any of the claims 1 to 11, which is arranged downstream with respect of said engine and upstream with respect of said catalytic converter.

## Patentansprüche

1. Abgaskühlungsvorrichtung (100), die ein Einlassrohr (101) und ein Auslassrohr (102), eine Hauptleitung (103) zur Verbindung von Einlassrohr (101) und Auslassrohr (102) und mindestens eine zusätzliche Leitung (104, 105) zur Verbindung von Einlassrohr (101) und Auslassrohr (102) umfasst, worin die Querschnittfläche der Hauptleitung (103) kleiner ist als die Querschnittfläche des Einlassrohrs (101) und in der mindestens einen zusätzlichen Leitung (104, 105) ein turbulenzerzeugendes Element angeordnet ist, worin das turbulenzerzeugende Element (140, 150) ein perforiertes Blatt (140, 150) umfasst, das die mindestens eine zusätzliche Leitung (104, 105) in einen stromaufwärtigen Abschnitt (141, 151) in Richtung des Einlassrohr (101) und einen stromabwärtigen Abschnitt (142, 152) in Richtung des Auslassrohrs (102) unterteilt, **dadurch gekennzeichnet, dass** das perforierte Blatt (140, 150) mit seinen Löchern mit Bezug auf die Gasströmungsrichtung im Einlassrohr (101) geneigt ist.

2. Abgaskühlungsvorrichtung (100) gemäß Anspruch 1, worin der Gasweg vom Einlassrohr (101) zum Auslassrohr (102) durch die Hauptleitung (103) kürzer ist als durch die mindestens eine zusätzliche Leitung (104, 105).

3. Abgaskühlungsvorrichtung (100) gemäß Anspruch 1 oder 2, worin die mindestens eine zusätzliche Gasleitung (104, 105) parallel zu und angrenzend an die Hauptleitung (103) angeordnet ist.

4. Abgaskühlungsvorrichtung (100) gemäß einem der vorangehenden Ansprüche, worin eine erste zusätzliche Leitung (104) und eine zweite zusätzliche Leitung (105) auf einander gegenüber liegenden Seiten der Hauptleitung (103) angeordnet sind.

5. Abgaskühlungsvorrichtung (100) gemäß einem der vorangehenden Ansprüche, bei der der stromaufwärtige Abschnitt (141, 151) kürzer ist als der stromabwärtige Abschnitt (142, 152).

6. Abgaskühlungsvorrichtung (100) gemäß einem der vorangehenden Ansprüche, bei der das perforierte Blatt (140, 150) eine doppelt gebogene Oberfläche aufweist und ein stromaufwärtiger Abschnitt des perforierten Blatts und ein stromabwärtiger Abschnitt des perforierten Blatts an einander gegenüber liegenden Hälften der Innenwand der Leitung (104, 105) befestigt sind.

7. Abgaskühlungsvorrichtung (100) gemäß einem der vorangehenden Ansprüche, bei der das perforierte Blatt (140, 150) in der zusätzlichen Leitung (104, 105) mittels kontinuierlicher Schweißung in Längsrichtung der zusätzlichen Leitung befestigt ist.

8. Abgaskühlungsvorrichtung, (100) gemäß einem der vorangehenden Ansprüche, eine obere Profilplatte (110) und eine untere Profilplatte (111) umfasst, die miteinander verbunden sind, um die Hauptleitung (103) und die mindestens eine zusätzliche Leitung (104, 105) zu bilden.

9. Abgaskühlungsvorrichtung (100) gemäß Anspruch 7 oder Anspruch 8, bei der der stromaufwärtige Abschnitt des perforierten Blatts (140, 150) an der oberen Profilplatte (110) angebracht ist.

10. Abgaskühlungsvorrichtung (100) gemäß Anspruch 8 oder Anspruch 9, worin das perforierte Blatt (140, 150) mit mindestens einer Zunge (143, 153) ausgestattet ist, die zwischen der oberen Profilplatte (110) und der unteren Profilplatte (111) eingefügt ist, um das perforierte Blatt in der zusätzlichen Leitung zu befestigen.

11. Abgaskühlungsvorrichtung (100) gemäß einem der vorangehenden Ansprüche, worin in der Hauptleitung (103) ein Drosselabschnitt (200) angeordnet ist, wobei der Drosselabschnitt eine erste (A1) und eine zweite (A2) maximale Querschnittfläche quer zur Längsrichtung der Hauptleitung (103) aufweist, und eine dritte Querschnittfläche (A3) quer zur Längsrichtung der Hauptleitung, wobei die dritte Querschnittfläche kleiner ist als die erste maximale Querschnittfläche und die zweite maximale Querschnittfläche.

12. Abgassystem eines Verbrennungsmotors, das einen Verbrennungsmotor, einen Katalysator und eine Abgaskühlungsvorrichtung (100) gemäß einem der Ansprüche 1 bis 11 umfasst, das mit Bezug auf den Motor stromabwärts und mit Bezug auf den Katalysator stromaufwärts angeordnet ist.

## Revendications

1. Dispositif de refroidissement des gaz d'échappement (100) comprenant un tuyau d'entrée (101) et un tuyau de sortie (102), une conduite principale (103) reliant ledit tuyau d'entrée (101) audit tuyau de sortie (102) et au moins une conduite supplémentaire (104, 105) reliant ledit tuyau d'entrée (101) audit tuyau de sortie (102), dans lequel l'aire de section de ladite conduite principale (103) est plus petite que l'aire de section dudit tuyau d'entrée (101), et un élément générateur de turbulences est disposé dans ladite au moins une conduite supplémentaire (104, 105), ledit élément générateur de turbulences (140, 150) comprenant une tôle perforée (140, 150), qui partage ladite au moins une conduite supplémentaire (104, 105) en une partie d'amont (141, 151), vers le tuyau d'entrée (101), et une partie d'aval (142, 152), vers le tuyau de sortie (102), **caractérisé en ce que** ladite tôle perforée (140, 150) avec ses trous est inclinée par rapport au sens d'écoulement des gaz dans le tuyau d'entrée (101).

2. Dispositif de refroidissement des gaz d'échappement (100) selon la revendication 1, dans lequel le trajet des gaz dudit tuyau d'entrée (101) audit tuyau de sortie (102) est plus court à travers ladite conduite principale (103) qu'à travers ladite au moins une conduite supplémentaire (104, 105).

3. Dispositif de refroidissement des gaz d'échappement (100) selon la revendication 1 ou 2, dans lequel ladite au moins une conduite de gaz supplémentaire (104, 105) est disposée parallèlement à ladite conduite principale (103) et adjacente de celle-ci.

4. Dispositif de refroidissement des gaz d'échappement (100) selon l'une quelconque des revendications précédentes, dans lequel une première conduite supplémentaire (104) et une deuxième conduite supplémentaire (105) sont disposées sur des côtés mutuellement opposés de ladite conduite principale (103).

5. Dispositif de refroidissement des gaz d'échappement (100) selon l'une quelconque des revendications précédentes, dans lequel ladite partie d'amont (141, 151) est plus courte que ladite partie d'aval (142, 152).

6. Dispositif de refroidissement des gaz d'échappement (100) selon l'une quelconque des revendications précédentes, dans lequel ladite tôle perforée (140, 150) possède une surface à double courbure, et une partie d'amont de ladite tôle perforée est ajustée contre des moitiés mutuellement opposées de la paroi intérieure de ladite conduite (104, 105).

7. Dispositif de refroidissement des gaz d'échappement (100) selon l'une quelconque des revendications précédentes, dans lequel ladite tôle perforée (140, 150) est fixée dans ladite conduite supplémentaire (104, 105) au moyen d'une soudure continue le long du sens longitudinal de ladite conduite supplémentaire.

8. Dispositif de refroidissement des gaz d'échappement (100) selon l'une quelconque des revendications précédentes, comprenant une plaque profilée supérieure (110) et une plaque profilée inférieure (111), qui sont assemblées pour former ladite conduite principale (103) et ladite au moins une conduite supplémentaire (104, 105).

9. Dispositif de refroidissement des gaz d'échappement (100) selon la revendication 7 ou 8, dans lequel la partie d'amont de ladite tôle perforée (140, 150) est ajustée contre ladite plaque profilée supérieure (110).

10. Dispositif de refroidissement des gaz d'échappement (100) selon la revendication 8 ou 9, dans lequel ladite tôle perforée (140, 150) est munie d'au moins une languette (143, 153) qui est intercalée entre ladite plaque profilée supérieure (110) et ladite plaque profilée inférieure (111) pour fixer ladite tôle perforée dans ladite conduite supplémentaire.

11. Dispositif de refroidissement des gaz d'échappement (100) selon l'une quelconque des revendications précédentes, dans lequel une partie d'étranglement (200) est disposée dans ladite conduite principale (103), ladite partie d'étranglement ayant une première aire de section maximale (A1) et une deuxième (A2) dans le sens transversal par rapport à un sens longitudinal de ladite conduite principale (103), et une troisième aire de section (A3) dans le sens transversal par rapport au sens longitudinal de ladite conduite principale, laquelle troisième aire de section est plus petite que ladite première aire de section maximale et que ladite deuxième aire de section maximale.

12. Système d'échappement de moteur à combustion interne, comprenant un moteur à combustion interne, un convertisseur catalytique et un dispositif de refroidissement des gaz d'échappement (100) selon l'une des revendications 1 à 11, qui est disposé en aval dudit moteur et en amont dudit convertisseur catalytique.
